# EUROPÄISCHE PATENTSCHRIFT

(11) **EP 3 142 924 B1**
(45) Veröffentlichungstag und Bekanntmachung des Hinweises auf die Patenterteilung: **07.08.2019**
(21) Anmeldenummer: 15723481.6
(22) Anmeldetag: 12.05.2015
(51) Int. Cl.: A47L 15/00, A47L 15/48, B64D 11/04, A47L 15/42

(54) **GESCHIRRSPÜLVORRICHTUNG FÜR EIN LUFTFAHRZEUG**
DISHWASHER FOR AN AIRPLANE
LAVE-VAISSELLE POUR UN AÉRONEF

(30) Priorität: 16.05.2014 DE 102014209359
(43) Veröffentlichungstag der Anmeldung: 22.03.2017
(73) Patentinhaber: Lufthansa Technik AG, 22335 Hamburg (DE)
(72) Erfinder: HAAS, Karl-Heinz, 88480 Achstetten (DE); HUBER, Peter, 89129 Setzingen (DE)
(74) Vertreter: Müller Verweyen
(86) Internationale Anmeldenummer: PCT/EP2015/060477
(87) Internationale Veröffentlichungsnummer: WO 2015/173242

(56) Entgegenhaltungen:
- DE-A1- 2 458 245
- DE-A1- 3 842 639

## Beschreibung

Die Erfindung betrifft eine Geschirrspülvorrichtung für ein Luftfahrzeug mit den Merkmalen des Oberbegriffs von Anspruch 1.

Es sind allgemein Geschirrspülvorrichtungen bekannt, die sich jedoch nur bedingt für den Einsatz in Luftfahrzeugen, insbesondere Flugzeugen, eignen. Diese Geschirrspülvorrichtungen umfassen im Wesentlichen einen Innenraum, der über eine Tür geöffnet bzw. geschlossen werden kann. Der Innenraum kann bei geöffneter Tür mit Geschirr be- und entladen werden. Während des Reinigungsvorgangs wird bei geschlossener Tür durch Aufbringen eines Reinigungsmediums über diverse Düsen das verschmutzte Geschirr gereinigt. Als Reinigungsmedium wird vorzugsweise Wasser mit entsprechenden Reinigungszusätzen, z.B. Flüssigchemikalien, Klarspüler und/oder Reinigungsmittel, verwendet.

Eine solche Geschirrspülvorrichtung ist beispielsweise aus DE 38 42 639 A1 bekannt.

Mit dem Einsatz einer Geschirrspülvorrichtung in einem Luftfahrzeug geht das Problem einher, dass der im Betrieb mit Reinigungsmedium gefüllte Innenraum der Geschirrspülvorrichtung gegenüber der Umgebung abgedichtet sein muss, um das Austreten von Reinigungsmedium zuverlässig zu verhindern. Mit der Umgebung ist in diesem Kontext die Kabine des Luftfahrzeugs gemeint. Neben der Dichtheit muss die Geschirrspülvorrichtung in der Lage sein, Druckschwankungen zwischen dem Innenraum der Geschirrspülvorrichtung und der Umgebung auszugleichen. Dies stellt insbesondere ein Problem bei einem plötzlich auftretenden Druckabfall in der Kabine dar. Findet in solch einer Situation kein ausreichend schneller Druckausgleich zwischen dem Innenraum und der Umgebung statt, besteht die Gefahr, dass die Geschirrspülvorrichtung durch den Überdruck im Innenraum zerstört wird und Personen gefährdet werden. Es ist daher eine besondere Herausforderung, einerseits den Innenraum gegenüber der Umgebung abzudichten und andererseits, für den Fall eines plötzlichen Druckabfalls in der Umgebung, den Druckgradienten zwischen dem Innenraum und der Umgebung schnellstmöglich abzubauen.

Hinzu kommt die Problematik, dass die Geschirrspülvorrichtung über eine Anschlusseinrichtung an das bordeigene Wasserversorgungs- bzw. Wasserentsorgungssystem anschließbar sein muss. Das bordeigene Wasserentsorgungssystem eines Luftfahrzeugs umfasst zumeist ein Vakuumsystem, in dem zum Absaugen des Abwassers ein Unterdruck gebildet wird. Es gilt daher, eine Schnittstelle zu schaffen, über die die Geschirrspülvorrichtung mit dem Vakuumsystem interagieren kann und somit die Menge an Reinigungsmedium, die dem Wasserentsorgungssystem zugeführt wird, gesteuert werden kann. Das Vakuumsystem bildet somit neben dem Druck in der Kabine eine weitere Umgebungsdruckbedingung, unter der die Geschirrspülvorrichtung einsatzfähig sein muss.

Aufgabe der Erfindung ist es, eine Geschirrspülvorrichtung für ein Luftfahrzeug bereitzustellen, bei der die Zuverlässigkeit und Sicherheit bei luftfahrttypischen Umgebungsdruckbedingungen erhöht ist.

Gemäß dem Grundgedanken der Erfindung wird zur Lösung der Aufgabe vorgeschlagen, dass die Verriegelungseinrichtung dazu eingerichtet ist, die Tür aus der geschlossenen Stellung durch eine Lösebewegung bei Überschreiten eines vorbestimmten Druckgradienten zwischen dem Innenraum und einer Umgebung der Geschirrspülvorrichtung freizugeben. In Luftfahrzeugen, insbesondere in Passagierflugzeugen, kann es während des Flugbetriebs zu einem sprunghaften Abfall des Kabinendrucks kommen. Unter einem sprunghaften Druckabfall ist ein Druckabfall zu verstehen, der nicht durch die üblichen Druckschwankungen z.B. durch eine moderate und für die Beförderung von Passagieren typische Veränderung der Flughöhe hervorgerufen wird. Ein sprunghafter Druckabfall kann beispielsweise durch eine Beschädigung der Außenhaut eines Luftfahrzeugs hervorgerufen werden. Insbesondere ist unter einem sprunghaften Druckabfall eine Druckreduzierung von 719 hPa auf 144 hPa innerhalb von 15 Sekunden zu verstehen. Hierbei ist mit einem sprunghaften Druckabfall ein Druckabfall von mehr als 10 hPa pro Sekunde gemeint, weiter vorzugsweise von mehr als 20 hPa pro Sekunde, insbesondere vorzugsweise von mehr als 30 hPa pro Sekunde. Diese Druckreduzierung bezieht sich auf die Umgebung, es wird dabei angenommen, dass der Druck im Innenraum im Wesentlichen konstant bleibt oder der Druckabfall im Innenraum im Vergleich zum Druckabfall in der Umgebung zeitverzögert ist. In einem geschlossenen Raum, wie z.B. in dem Innenraum der Geschirrspülvorrichtung, findet der Druckausgleich mit der Umgebung gar nicht oder nur zeitverzögert statt. Insbesondere durch die Abdichtung der Geschirrspülvorrichtung, durch die ein Austreten des Reinigungsmediums während des Betriebs vermieden wird, wird die Verzögerung des Druckabfalls in dem Innenraum der Geschirrspülvorrichtung verstärkt. Es entsteht so ein Druckgradient zwischen der Umgebung, also der Kabine, und dem Innenraum der Geschirrspülvorrichtung, der zu einer Zerstörung der den Innenraum bildenden Wände führen kann. Durch den Druckgradienten zwischen dem Innenraum und der Umgebung bei einem sprunghaften Druckabfall wirkt auf die Innenfläche der Tür eine Druckkraft von ca. 40 bis 50 kN. Durch die erfindungsgemäße Lösung ist die Verriegelungseinrichtung durch den Druckgradienten zwischen Umgebung und Innenraum steuerbar, so dass die Verriegelungseinrichtung bei Überschreiten eines vorbestimmten Druckgradienten gelöst wird. Es kann dadurch die Tür in einer Lösebewegung geöffnet werden, was ein Überströmen des Gases aus dem Innenraum in die Umgebung zur Folge hat. Vorzugsweise ist die Lösebewegung so festgelegt, dass ein kontrolliertes Öffnen der Tür ermöglicht wird. Durch das Öffnen der Tür, die vorzugsweise als eine Klapptür ausgebildet ist, wird schlagartig ein im Verhältnis zum Volumen des Innenraums großer Strömungsquerschnitt geöffnet, wodurch ein ausreichend schneller Druckausgleich zwischen dem Innenraum und der Umgebung vollzogen werden kann. Eine Zerstörung der Geschirrspülvorrichtung durch den im Innenraum entstehenden Überdruck bei einem sprunghaften Druckabfall in der Umgebung wird so zuverlässig vermieden.

Hierbei ist die Lösebewegung der Tür durch einen Endanschlag der Verriegelungseinrichtung begrenzt. Durch den großen Strömungsquerschnitt, der sich bereits bei einer geringen Öffnungsbewegung der Tür bildet, wird ein ausreichend schneller Druckausgleich ermöglicht. Die Tür vollzieht ausgehend von der geschlossenen Stellung die Lösebewegung, bis der Endanschlag die Lösebewegung der Tür begrenzt. Durch die Beschränkung der Öffnungsbewegung der Tür kann außerdem vermieden werden, dass vor der Geschirrspülvorrichtung befindliche Personen verletzt werden, und dass Geschirrteile aus der Geschirrspülvorrichtung herausgeschleudert werden. Vorzugsweise wird der Endanschlag durch ein Formschlusselement gebildet.

Es ist bevorzugt, dass die Öffnung der Tür in der Endanschlagstellung eine maximale Spaltweite von 25 cm aufweist. Vorzugsweise liegt die maximale Spaltweite bei maximal 15 cm, weiter vorzugsweise bei maximal 5 cm, insbesondere vorzugsweise bei maximal 2,5 cm. Vorzugsweise liegt die minimale Spaltweite in der Endanschlagstellung bei 1 mm, weiter vorzugsweise bei 3 mm und insbesondere vorzugsweise bei 5 mm. Vorzugsweise liegt der Öffnungswinkel der Tür bei maximal 35°, vorzugsweise zwischen 0,5° und 5°, weiter vorzugsweise bei ca. 2,5°. Die begrenzte Öffnung der Tür ermöglicht es so, einen ausreichend großen Strömungsquerschnitt freizugeben, so dass ein genügend schneller Druckausgleich zwischen der Umgebung und dem Innenraum stattfinden kann. Gleichzeitig wird durch die Begrenzung der Spaltweite bzw. des Öffnungswinkels ein Herausfliegen von Geschirr aus dem Innenraum der Geschirrspülvorrichtung zuverlässig verhindert. Weiter wird durch den geringen Bewegungsumfang der Tür verhindert, dass Passagiere verletzt werden, die sich vor der Tür der Geschirrspülvorrichtung aufhalten.

Weiter vorzugsweise umfasst die Verriegelungseinrichtung eine kraftabhängig lösbare Verbindung zum Sichern der Tür in geschlossener Stellung. Eine kraftabhängig lösbare Verbindung kann beispielsweise durch eine reibschlüssige Verbindung oder durch eine durch Materialdeformation lösbare Verbindung gebildet werden. Bei der reibschlüssigen Verbindung wird die Verbindung durch eine Haftkraft bzw. Haltekraft zweier sich gegenüberliegender Flächen hergestellt. Mit einer durch Materialdeformation lösbaren Verbindung sind Verbindungen gemeint, die durch elastische oder plastische Materialdeformationen lösbar sind. Dazu zählt beispielsweise das Aufreißen einer Verbindung an einer dafür vorgesehenen Stelle bei Überschreiten einer vorbestimmten Kraft. Die kraftabhängig lösbare Verbindung muss dafür eingerichtet sein, die Verbindung bis zu einer vorbestimmten Haltekraft zuverlässig aufrechtzuerhalten und bei einem Überschreiten der Haltekraft die Verbindung zu lösen. Vorzugsweise liegt die Haltekraft zwischen 5 und 60 kN, weiter vorzugsweise zwischen 10 und 40 kN und insbesondere vorzugsweise zwischen 20 und 30 kN.

Vorzugsweise umfasst die Verriegelungseinrichtung eine Verriegelungsplatte und einen Verriegelungsstift, wobei der Verriegelungsstift eine Hinterschneidung in der Verriegelungsplatte hintergreift. Die Tür der Geschirrspülvorrichtung kann so bei einem normalen Reinigungsbetrieb der Geschirrspülmaschine durch die Verriegelungseinrichtung gesichert werden. Ein ungewünschtes Öffnen der Tür, beispielsweise in unruhigen Flugsituationen, in denen Beschleunigungen auf die Geschirrspülvorrichtung wirken, wird somit wirksam verhindert. Vorzugsweise ist der Verriegelungsstift durch eine Betätigungseinrichtung, z.B. durch einen Handgriff, aus bzw. in die Hinterschneidung bewegbar.

Ferner wird vorgeschlagen, dass die Verriegelungsplatte an dem Gehäuse und/oder an der Tür über eine Sicherung gesichert ist, wobei die Verriegelungsplatte verschiebbar gegenüber der Sicherung gehalten ist. Vorzugsweise erfolgt die Verschiebebewegung im Wesentlichen parallel zur Öffnungsbewegung der Tür. Die Verriegelungsplatte wird damit von der Sicherung in Position gehalten. Erst bei einem Überschreiten einer vorbestimmten Kraft, die durch den Überdruck im Innenraum der Geschirrspülvorrichtung auf die Tür wirkt und so in die Verriegelungsplatte eingeleitet wird, vollzieht die Verriegelungsplatte eine Verschiebebewegung gegenüber der Sicherung. Die Verschiebebewegung wird durch eine Schwenkbewegung der Tür herbeigeführt. Durch den kleinen Bewegungswinkel kann die Verschiebebewegung im Wesentlichen als linear angesehen werden. Während der Verschiebebewegung bleibt der Verriegelungsstift mit der Hinterschneidung der Verriegelungsplatte verbunden. Die Richtung der Öffnungsbewegung der Tür ist dabei die Bewegungsrichtung des Abschnittes der Tür, an dem die Verriegelungsplatte angreift.

Weiter ist es vorteilhaft, wenn die Sicherung ein Haltemittel mit einstellbarer Haltekraft umfasst, das einen Teilbereich der Verriegelungsplatte mit dem Gehäuse und/oder mit der Tür reibschlüssig verbindet. Vorzugsweise wird das Haltemittel durch eine Schraube gebildet, die mit einem definierten Drehmoment angezogen wird. Vorzugsweise weist die Verriegelungsplatte ein Langloch auf, durch welches die Schraube mit dem Gehäuse und/oder mit der Tür verbunden wird. Der Schraubenkopf drückt so die Verriegelungsplatte gegen das Gehäuse. Nachdem die so zwischen der Verriegelungsplatte und dem Gehäuse und/oder der Tür wirkende Haltekraft bzw. Haftkraft überwunden ist, erfolgt die Verschiebebewegung bis in eine Endanschlagstellung.

Vorzugsweise ist die Verriegelungsplatte in einer Endanschlagstellung formschlüssig mit der Sicherung verbunden, so dass eine weitere Öffnung der Tür verhindert wird. Nachdem die Haftkraft überwunden ist, wird somit eine Verschiebebewegung ermöglicht, die jedoch durch die formschlüssige Verbindung der Verriegelungsplatte mit der Sicherung in der Endanschlagstellung begrenzt wird. Es kann so sichergestellt werden, dass die Tür nur bis zu einem gewissen Winkel geöffnet wird. Eine Bewegung der Tür in die vollständig geöffnete Stellung ist nur möglich, wenn der Verriegelungsstift aus der Hinterschneidung in der Verriegelungsplatte bewegt wird.

Ferner wird vorgeschlagen, dass die Verriegelungseinrichtung derart angeordnet ist, dass durch diese ein Randbereich der Tür, der einer Drehachse der Tür gegenüberliegt, und ein entsprechender Bereich des Gehäuses miteinander verbindbar sind.

Diese erfindungsgemäße Anordnung der Verriegelungseinrichtung stellt sicher, dass die Öffnungsbewegung der Tür eine annähernd lineare Verschiebebewegung der Verriegelungseinrichtung zur Folge hat. Außerdem kann so durch eine einzige Verriegelungseinrichtung eine zuverlässige Verriegelung der Tür sichergestellt werden.

Es ist weiter vorteilhaft, wenn ein Sicherungsbolzen die Öffnungsbewegung der Tür zumindest teilweise blockiert. Der Sicherungsbolzen dient dazu, die Tür in der Endanschlagstellung vor einer weiteren Bewegung zu sichern. Neben der Verriegelungseinrichtung liegt damit vorzugsweise ein redundanter Sicherungsmechanismus vor, um die Öffnungsbewegung der Tür zu begrenzen. Dies ist insbesondere wegen der großen Kräfte, die im Falle eines plötzlichen Druckabfalls in der Umgebung auf die Tür wirken, vorteilhaft. Vorzugsweise ist die Axialbewegung des Sicherungsbolzens über einen Verriegelungsmagneten steuerbar.

Erfindungsgemäß wird vorgeschlagen, dass die Tür in der geschlossenen Stellung den Innenraum gegenüber der Umgebung im Wesentlichen vollständig abdichtet, wobei eine Ventileinrichtung zur Einstellung eines Druckausgleichs zwischen dem Innenraum und der Umgebung vorgesehen ist. Durch die vollständige Abdichtung der Tür wird erreicht, dass das Reinigungsmedium während des Reinigungsvorgangs nicht aus dem Innenraum austreten kann. Eine vollständig abgedichtete Tür hat jedoch den Nachteil, dass ein Druckausgleich zwischen dem Innenraum und der Umgebung nicht stattfinden kann. Hierbei sind kleinere Druckschwankungen gemeint, die nicht wie bei einem plötzlichen Druckabfall in der Umgebung ein Öffnen der Tür durch die Verriegelungseinrichtung zur Folge haben. Durch die Ventileinrichtung werden damit kleinere Druckgradienten zwischen Umgebung und Innenraum ausgeglichen. Vorzugsweise dient die Ventileinrichtung neben dem Druckausgleich auch dem Ablaufen von Kondensationswasser. Weiter vorzugsweise ist die Ventileinrichtung an der Grundfläche des Bodens des Innenraums angeordnet.

Es ist vorteilhaft, wenn eine Anschlusseinrichtung vorgesehen ist, wobei diese einen mit einem Vakuumsystem des Luftfahrzeugs strömungstechnisch verbindbaren Abwassertank umfasst, wobei der Abwassertank über eine Verbindungsleitung mit einem Waschtank strömungstechnisch verbindbar ist. Der Waschtank dient dazu, das Reinigungsmedium der Geschirrspülvorrichtung aufzufangen und aufzubereiten, z.B. durch Erwärmung über einen Boiler, um es anschließend erneut zum Reinigen des Geschirrs zu verwenden. Wird das Reinigungsmedium nicht mehr für den Reinigungsvorgang benötigt, muss es dem bordeigenen Wasserentsorgungssystem zugeführt werden; dabei handelt es sich in der Regel um ein Vakuumsystem. Durch den im Vakuumsystem vorhandenen Unterdruck wird das Reinigungsmedium abgesaugt. Damit nur ein bestimmtes Volumen an Reinigungsmedium von dem Vakuumsystem abgesaugt wird, wird zunächst eine definierte Menge an Reinigungsmedium in einen Abwassertank gepumpt. Der Abwassertank ist strömungstechnisch über eine Schnittstelle mit dem Vakuumsystem verbunden, so dass im Falle einer strömungstechnisch freien Verbindung zwischen dem Vakuumsystem und dem Abwassertank, nur das sich im Abwassertank befindliche Volumen an Reinigungsmedium dem Vakuumsystem und damit dem Wasserentsorgungssystem zugeführt wird. Der Vorteil dieser Anordnung liegt darin, dass durch den Abwassertank, der von den übrigen Reinigungsmediumleitungen der Geschirrspülvorrichtung strömungstechnisch entkoppelbar ist, eine Art Schleuse entsteht, durch die das Volumen an Reinigungsmedium, das dem Wasserentsorgungssystem zugeführt werden soll, gesteuert werden kann.

Ferner ist es vorteilhaft, wenn in der Verbindungsleitung eine Pumpe vorgesehen ist, wobei die Pumpe dazu eingerichtet ist, das Reinigungsmedium von dem Waschtank zu einem im Vergleich zu dem Waschtank höher gelegenen Teilabschnitt der Verbindungsleitung zu befördern. Vorzugsweise ist zwischen dem Waschtank und der Pumpe ein Partikelfilter angeordnet.

Vorzugsweise ist das Reinigungsmedium von dem höher gelegenen Teilabschnitt strömungstechnisch frei mit dem niedriger gelegenen Abwassertank verbindbar. Durch die Gravitationswirkung wird das Reinigungsmedium von dem höher gelegenen Teilabschnitt in den Abwassertank befördert. Es wird so eine Hygienestrecke zwischen dem Abwassertank und dem Waschtank geschaltet, wodurch vermieden wird, dass beispielsweise Keime aus dem Wasserentsorgungssystem des Luftfahrzeugs in den Innenraum der Geschirrspülvorrichtung gelangen und so das Geschirr mit Keimen kontaminiert wird.

Weiter ist es vorteilhaft, wenn der höher gelegene Teilabschnitt über ein Ventil mit dem Abwassertank strömungstechnisch verbindbar ist. Der Abwassertank kann so strömungstechnisch von dem Waschtank entkoppelt werden. Bei geschlossenem Ventil wird so verhindert, dass durch den Unterdruck im Vakuumsystem nicht nur das Reinigungsmedium des Abwassertanks, sondern auch das Reinigungsmedium des Waschtanks in das Wasserentsorgungssystem gelangt.

In einer weiteren vorteilhaften Ausführungsform ist die Befüllung des Abwassertanks mit Reinigungsmedium in Abhängigkeit des Füllstandes in dem Abwassertank und/oder dem Waschtank regelbar. Zur Ermittlung des Füllstandes ist dann an dem Abwassertank und/oder dem Waschtank zumindest jeweils ein Füllstandsensor vorgesehen. Bevorzugt ist ein erster Füllstandsensor an dem Abwassertank vorgesehen und ein zweiter Füllstandsensor an dem Waschtank. Vorzugsweise sind der erste und der zweite Füllstandsensor an jeweils einem Steigrohr angeordnet, wobei das jeweilige Steigrohr strömungstechnisch mit dem Abwassertank bzw. mit dem Waschtank verbunden ist. Das Reinigungsmedium wird beispielsweise unter der folgenden Bedingung von dem Waschtank in den Abwassertank gepumpt: Der Füllstand in dem Abwassertank liegt unter einem definierten Schwellwert und der Füllstand des Waschtanks liegt über einem definierten Schwellwert. Daneben können weitere Regelungsalgorithmen hinterlegt werden, insbesondere können Parameter des Spülprogramms als Eingangsgrößen des Regelungssystems dienen.

Die Erfindung wird im Folgenden anhand bevorzugter Ausführungsformen unter Bezugnahme auf die beigefügten Figuren erläutert. Dabei zeigen:
- Fig. 1: eine Geschirrspülvorrichtung in einer schematischen Schnittansicht mit einer Tür in einer geschlossenen Stellung (links) und in einer Endanschlagstellung (rechts);
- Fig. 2: eine Geschirrspülvorrichtung in einer perspektivischen Ansicht mit einer Tür in einer Endanschlagstellung;
- Fig. 3: eine Geschirrspülvorrichtung in einer Schnittansicht mit einer Tür in einer Endanschlagstellung;
- Fig. 4: einen Ausschnitt der Geschirrspülvorrichtung im Bereich einer Drehachse der Tür; und
- Fig. 5: einen schematischen Schaltplan eines Teilsystems einer Anschlusseinrichtung.

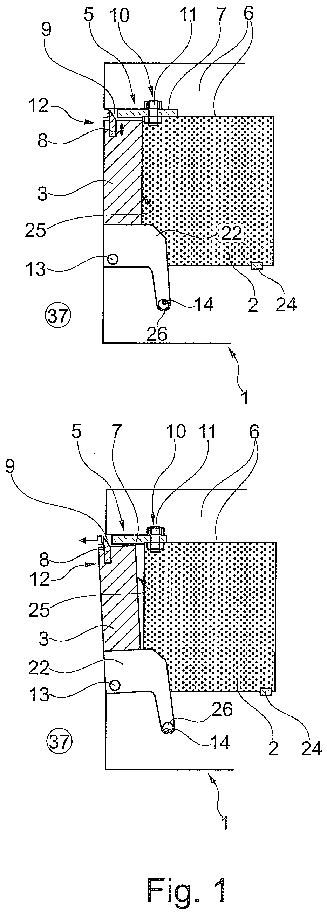

Fig. 1 zeigt in einer schematischen Schnittansicht den wesentlichen mechanischen Aufbau einer Geschirrspülvorrichtung 1. Die Geschirrspülvorrichtung 1 umfasst im Wesentlichen einen Innenraum 2, ein den Innenraum 2 umgebendes Gehäuse 6, eine Tür 3 und eine Verriegelungseinrichtung 5. In einer geöffneten Stellung der Tür 3 ist der Innenraum 2 geöffnet und in einer geschlossenen Stellung der Tür 3 ist der Innenraum 2 geschlossen. Die Tür 3 ist um eine Drehachse 13 schwenkbar gelagert, wobei die Tür 3 über einen Scharnierhebel 22 mit der Drehachse 13 verbunden ist.

Weiter zeigt Fig. 1 die Verriegelungseinrichtung 5 im Detail. Die Verriegelungseinrichtung 5 umfasst eine Verriegelungsplatte 7, eine Sicherung 10 und einen Verriegelungsstift 8. Die Verriegelungsplatte 7 ist mit dem Gehäuse 6 über die Sicherung 10 verbunden, die vorzugsweise durch ein Haltemittel 11 gebildet ist. Das Haltemittel 11, das vorzugsweise durch eine Schraube gebildet ist, verbindet die Verriegelungsplatte mit dem Gehäuse 6 reibschlüssig. Die reibschlüssige Verbindung wird gelöst, wenn die Haltekraft bzw. Haftkraft überwunden wurde, wobei die Haltekraft voreinstellbar ist. Für den Fall, dass das Haltemittel 11 durch eine Schraube gebildet wird, kann die Haltekraft durch das Drehmoment eingestellt werden, mit dem die Schraube angezogen wird. Die den Innenraum 2 bildenden Wände können dabei auch als Teil des Gehäuses 6 angesehen werden. Über das Haltemittel 11 ist somit die Haltekraft einstellbar, die für eine Verschiebebewegung der Verriegelungsplatte 7 gegenüber dem Gehäuse 6 überwunden werden muss. Das Haltemittel 11 wird vorzugsweise durch ein Langloch in der Verriegelungsplatte 7 geführt, wobei durch die Länge des Langlochs die maximale Verschiebebewegung der Verriegelungsplatte 7 gegenüber dem Gehäuse 6 festlegbar ist.

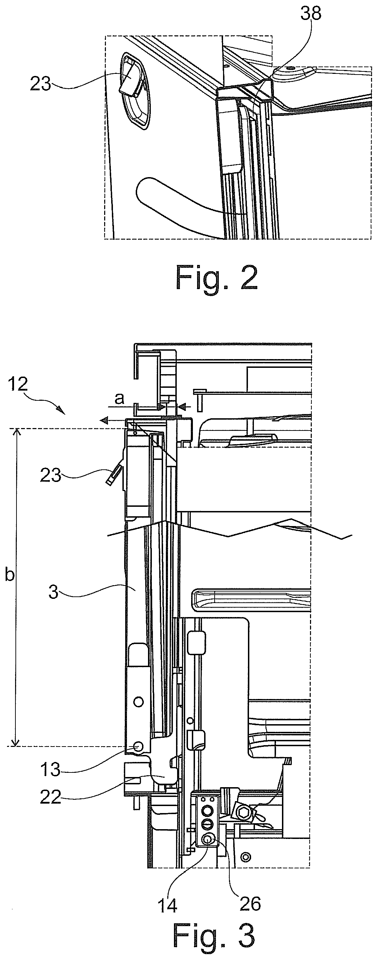

In der Verriegelungsplatte 7 ist eine Hinterschneidung 9 vorgesehen. In geschlossener Stellung kann die Tür 3 verriegelt werden, indem der Verriegelungsstift 8 die Hinterschneidung 9 hintergreift; der Verriegelungsstift 8 ist damit formschlüssig mit der Verriegelungsplatte 7 verbunden. Der Verriegelungsstift 8 ist in einem Randbereich 12 der Tür 3 angeordnet, der der Drehachse 13 gegenüberliegt. Ferner ist der Verriegelungsstift 8 in seiner Längsachse bewegbar, wobei die Bewegung entlang seiner Längsachse vorzugsweise durch einen an der Außenseite der Tür 3 angeordneten Handgriff 23, siehe Fig. 2 und Fig. 3, verstellbar ist.

Die Bewegung der Tür 3 erfolgt grundsätzlich in einer Schwenkbewegung um eine Drehachse 13. Die Tür 3 ist hierfür über den Scharnierhebel 22 drehbar mit der Drehachse 13 verbunden. Die Tür 3 dichtet in geschlossener Stellung den Innenraum 2 im Wesentlichen vollständig von der Umgebung 37 ab. In den verschiedenen Flugphasen des Luftfahrzeugs verändert sich der Luftdruck in der Umgebung 37. Durch den so entstehenden Druckgradienten zwischen der Umgebung 37 und dem Innenraum 2 wirkt auf die den Innenraum 2 bildenden Flächen eine Kraft, die unter Umständen zu einer Zerstörung der Geschirrspülvorrichtung 1 führen kann. Es ist daher eine Ventileinrichtung 24 vorgesehen, die dazu dient, den Druckgradienten abzubauen. Aufgrund des geringen Strömungsquerschnitts der Ventileinrichtung 24 kann der Druckgradient nur bei langsam wechselnden Umgebungsdruckbedingungen abgebaut werden. In einer bevorzugten Ausführungsform der Erfindung dient die Ventileinrichtung 24 auch dazu, sich im Innenraum bildendes Kondensat aus dem Innenraum 2 abzuleiten.

Bei einem sprunghaften Druckfall in der Umgebung 37 kann ein ausreichend schneller Abbau des Druckgradienten zwischen Umgebung 37 und Innenraum 2 nicht mehr über die Ventileinrichtung 24 erfolgen. Unter einem sprunghaften Druckabfall ist ein Druckabfall zu verstehen, der nicht durch die üblichen Druckschwankungen z.B. durch eine moderate und für die Beförderung von Passagieren typische Veränderung der Flughöhe hervorgerufen wird. Ein sprunghafter Druckabfall kann beispielsweise durch eine Beschädigung der Außenhaut eines Luftfahrzeugs hervorgerufen werden. Insbesondere ist unter einem sprunghaften Druckabfall eine Druckreduzierung von 719 hPa auf 144 hPa innerhalb von 15 Sekunden zu verstehen. Hierbei ist mit einem sprunghaften Druckabfall ein Druckabfall von mehr als 10 hPa pro Sekunde gemeint, weiter vorzugsweise von mehr als 20 hPa pro Sekunde, insbesondere vorzugsweise von mehr als 30 hPa pro Sekunde. Diese Druckreduzierung bezieht sich auf die Umgebung 37, es wird dabei angenommen, dass der Druck im Innenraum 2 im Wesentlichen konstant bleibt oder der Druckabfall im Innenraum 2 im Vergleich zum Druckabfall in der Umgebung 37 zeitverzögert ist.

Es dient daher die Verriegelungseinrichtung 5 mit der Sicherung 10 dazu, einen schnellen und sicheren Druckausgleich zwischen dem Innenraum 2 und der Umgebung 37 zu schaffen. Im Falle eines sprunghaften Druckabfalls in der Umgebung 37 entsteht ein Überdruck in dem Innenraum 2. Eine Innenfläche 25 der Tür 3 wird dadurch mit Druck beaufschlagt, woraus eine Kraftwirkung in Pfeilrichtung in Fig. 1 (rechts) resultiert. Durch den sprunghaften Druckabfall in der Umgebung 37 kommt es auch im Innenraum 2 zu einem verzögerten Druckabfall, der zur Folge hat, dass heißes Wasser im Innenraum 2 schlagartig verdampft, wodurch es zu einer zusätzlichen Druckerhöhung im Innenraum 2 kommt. Durch den Druckgradienten zwischen dem Innenraum 2 und der Umgebung 37 wirkt auf die Innenfläche 25 der Tür 3 eine Druckkraft von ca. 40 bis 50 kN.

In dem Ausführungsbeispiel in Fig. 1 wird die Sicherung 10 durch das Haltemittel 11 gebildet, wobei das Haltemittel 11 vorzugsweise durch eine Schraube gebildet ist. Durch das Haltemittel 11 wird die Verriegelungsplatte 7 mit dem Gehäuse 6 reibschlüssig verbunden, so dass zwischen den sich gegenüberliegenden Flächen der Verriegelungsplatte 7 und des Gehäuses 6 eine Haltekraft wirkt. Die durch das Haltemittel 11 definierte Haltekraft muss so groß sein, dass die Verbindung bis zum Erreichen einer vorbestimmten Druckkraft, die an der Innenfläche 25 der Tür 3 wirkt, aufrechterhalten werden kann. Vorzugsweise liegt die Haltekraft zwischen 5 und 60 kN, weiter vorzugsweise zwischen 10 und 40 kN und insbesondere vorzugsweise zwischen 20 und 30 kN. Die Haltekraft der Sicherung 10 wird in diesem Ausführungsbeispiel durch die Haltekraft der gegeneinander gepressten Flächen definiert. Nachdem die Haltekraft überwunden wurde, vollzieht die Verriegelungsplatte 7 eine Verschiebebewegung in Pfeilrichtung bis in eine Endanschlagstellung, die in Fig. 1 rechts dargestellt ist. Der Verriegelungsstift 8 bleibt in diesem Zustand mit der Verriegelungsplatte 7 formschlüssig verbunden. Die Endanschlagstellung wird durch einen Endanschlag der Verriegelungseinrichtung 5 definiert, wobei der Endanschlag durch den Endbereich eines Langlochs in der Verriegelungseinrichtung 5 gebildet wird. Die Länge des Langlochs in der Verriegelungsplatte 7 definiert die Endanschlagstellung.

Zusätzlich ist zur Sicherung des Überschreitens der Endanschlagstellung ein Sicherungsbolzen 14 vorgesehen, der in seiner Längsrichtung in eine Aussparung 26 des Scharnierhebels 22 fahrbar ist, siehe auch Fig. 3. Der Sicherungsbolzen 14 und die Aussparung 26 liegen außerhalb der Drehachse 13, so dass die Drehbewegung und damit der Öffnungswinkel der Tür 13 begrenzt werden kann. Der Sicherungsbolzen 14 liegt, wenn er in die Aussparung 26 gefahren wird, nicht formkorrespondierend an der Aussparung 26 an, wodurch eine eingeschränkte Bewegung der Tür 3 ermöglicht wird. Die Aussparung 26 und der Sicherungsbolzen 14 sind dabei so dimensioniert, dass die Tür 3 aus der geschlossenen Stellung in die Endanschlagstellung bewegbar ist. In der Endanschlagstellung ist die Tür 3 nur so weit geöffnet, bis ein ausreichend großer Strömungsquerschnitt 38 entsteht, damit ein genügend schneller Abbau des Druckgradienten zwischen Innenraum 2 und Umgebung 37 erfolgen kann, siehe Fig. 2.

Fig. 3 zeigt die Tür 3 in der Endanschlagstellung, in der sie sich so weit in Richtung der geöffneten Stellung bewegt, bis der Sicherungsbolzen 14 an einer Randfläche der Aussparung 26 anliegt. In dem der Verriegelungseinrichtung 5 zugewandten Randbereich 12 der Tür 3 beträgt die maximale Spaltweite a zwischen 5 und 35 mm, vorzugsweise zwischen 10 und 30 mm und weiter vorzugsweise ca. 20 mm. Die Länge b der Tür 3 beträgt dabei vorzugsweise zwischen 400 und 500 mm, weiter vorzugsweise ca. 460 mm. Dies entspricht einem Öffnungswinkel der Tür 3 von vorzugsweise zwischen 0,5° und 5°, weiter vorzugsweise ca. 2,5°. Neben der Verriegelungseinrichtung 5 bildet der Sicherungsbolzen 14 einen redundanten Anschlag für die Endanschlagstellung. In einer weiteren Ausführungsform kann der Sicherungsbolzen 14 auch dazu genutzt werden, die Tür 3 in der vollständig geschlossenen Stellung zu arretieren.

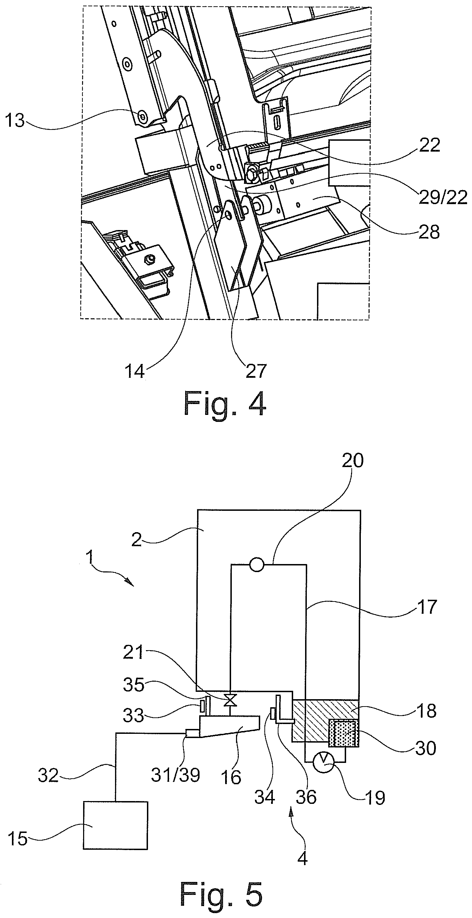

Fig. 4 zeigt eine perspektivische Ansicht des Bereichs der Drehachse 13. Der Sicherungsbolzen 14 ist so gelagert, dass er über einen Verriegelungsmagneten 28 axial verschiebbar ist. Der Sicherungsbolzen 14 wird in seiner aktivierten Stellung durch zwei Arretierungselemente 27 gestützt, um die hohen Kräfte im Fall eines sprunghaften Druckabfalls in der Umgebung 37 aufnehmen zu können. Zwischen den Arretierungselementen 27 wird der Sicherungsbolzen 14 durch die Aussparung 26 einer Aufnahmeplatte 29 geführt, wobei die Aufnahmeplatte 29 als Teil des Scharnierhebels 22 angesehen werden kann. Die Stellung des Sicherungsbolzens 14 wird über den Verriegelungsmagneten 28 eingestellt. Vorzugsweise wird bei geschlossener Tür 3 der Sicherungsbolzen 14 durch den Verriegelungsmagneten 28 in die aktive Stellung gebracht. Zum Öffnen der Tür 3 kann der Sicherungsbolzen 14 dann in die deaktivierte Stellung bewegt werden. Die Steuerung der Stellung des Sicherungsbolzens 14 kann beispielsweise in Abhängigkeit der Stellung des Handgriffs 23 erfolgen.

Fig. 5 zeigt einen schematischen Schaltplan eines Teilsystems einer Anschlusseinrichtung 4; es wird dabei nachfolgend ein erfindungsgemäßes Teilsystem der Abwasserentsorgung beschrieben. Das Anschlusssystem umfasst die Anbindung an die elektronische Versorgung des Luftfahrzeugs, die Frischwasserversorgung und weitere elektronische Schnittstellen, die z.B. zur Steuerung und Diagnose dienen. In Fig. 5 ist der Innenraum 2 der erfindungsgemäßen Geschirrspülvorrichtung 1 zu erkennen, in dem ein Reinigungsmedium auf das Geschirr aufgebracht wird. In einem tief gelegenen Bereich des Innenraums 2 ist ein Waschtank 18 angeordnet, in dem sich das Reinigungsmedium sammelt und beispielsweise für eine erneute Verwendung aufbereitet wird. Unter die Aufbereitung des Reinigungsmediums fällt beispielsweise das Erhitzen durch einen Boiler.

Das Reinigungsmedium des Waschtanks 18 kann über eine Verbindungsleitung 17 in einen Abwassertank 16 gepumpt werden. Die Verbindungsleitung 17 weist einen Teilabschnitt 20 auf, der höher gelegen ist als der Waschtank 18 und der Abwassertank 16. Für den Pumpvorgang ist eine Pumpe 19 vorgesehen, wobei zwischen der Pumpe 19 und dem Waschtank 18 vorzugsweise ein Partikelfilter 30 geschaltet ist. Weiter ist die Pumpe 19 vorzugsweise zwischen dem Teilabschnitt 20 und dem Waschtank 18 angeordnet. Von dem Teilabschnitt 20 kann das Reinigungsmedium strömungstechnisch frei in den Abwassertank 16 strömen, sofern ein Ventil 21, das in der Verbindungsleitung 17 vorzugsweise unmittelbar vor dem Abwassertank 16 angeordnet ist, geöffnet ist. Unter einer strömungstechnisch freien Verbindung wird in diesem Kontext eine strömungstechnische Verbindung verstanden, die das Reinigungsmedium ungehindert durchströmen kann. Durch die wirkende Gravitationskraft kann das Reinigungsmedium damit von dem höher gelegenen Teilabschnitt 20 in den Abwassertank 16 strömen; das Reinigungsmedium gelangt damit durch einen freien Fall in den Abwassertank 16.

Der Abwassertank 16 ist über eine Schnittstelle 31 und eine Anschlussleitung 32 mit einem Vakuumsystem 15 des Luftfahrzeugs strömungstechnisch verbunden. Das Ventil 21 dient somit dazu, das Vakuumsystem 15 in Abhängigkeit der Ventilstellung von dem Waschtank 18 entkoppelbar zu machen. Ist das Ventil 21 in einer geschlossenen Stellung, so kann lediglich das sich im Abwassertank 16 befindliche Reinigungsmedium in das Vakuumsystem abgesaugt werden. Der Abwassertank 16 umfasst dabei ein Volumen von vorzugsweise 2 bis 4 Litern, weiter vorzugsweise von ca. 3 Litern. Das Absaugen des Reinigungsmediums aus dem Waschtank 18 wird somit verhindert. Vorzugsweise ist in der Schnittstelle 31 ein Ventil 39 vorgesehen, das mit dem Vakuumsystem 15 des Luftfahrzeugs interagiert. Alternativ kann das Ventil 39 auch außerhalb der Schnittstelle 31 angeordnet sein. Vorzugsweise öffnet das Ventil 39 erst, wenn der Abwassertank 16 gefüllt ist und das Ventil 21 geschlossen ist. Es wird so sichergestellt, dass durch das Vakuumsystem 15 nur der Inhalt des Abwassertanks 16 abgesaugt wird.

Der Volumenstrom an Reinigungsmittel von dem Waschtank 18 in den Abwassertank 16 wird im Wesentlichen durch die Pumpleistung der Pumpe 19 eingestellt. Als Eingangsparameter für die Regelung der Pumpleistung dienen dabei vorzugsweise der Füllstand des Abwassertanks 16 und/oder der Füllstand des Waschtanks 18. Die Information über den Füllstand des Abwassertanks 16 und des Waschtanks 18 wird über jeweils wenigstens einen Füllstandsensor 33 bzw. 34 ermittelt, vorzugsweise werden die Füllstandsensoren 33 bzw. 34 durch kapazitative Sensoren gebildet. Vorteilhaft sind die Füllstandsensoren jeweils in einem Steigrohr 35 bzw. 36 angeordnet; vorzugsweise besteht das Steigrohr aus Kunststoff. In einer bevorzugten Ausführungsform dient das Steigrohr 35 und/oder das Steigrohr 36 als Entlüftungsrohr.

## Patentansprüche

1. Geschirrspülvorrichtung (1) für ein Luftfahrzeug, umfassend
- einen Innenraum (2), welcher zur Aufnahme von zu reinigendem Geschirr und Reinigungsmedium dient, und
- eine Tür (3), welche in einer geschlossenen Stellung eine Öffnung des Innenraums (2) verschließt, und
- eine Anschlusseinrichtung (4) zur Verbindung der Geschirrspülvorrichtung (1) mit einem Wasserentsorgungssystem des Luftfahrzeugs, wobei
- die Tür (3) über wenigstens eine Verriegelungseinrichtung (5) in der geschlossenen Stellung gesichert ist, **dadurch gekennzeichnet, dass**
- die Verriegelungseinrichtung (5) dazu eingerichtet ist, die Tür (3) aus der geschlossenen Stellung durch eine Lösebewegung bei Überschreiten eines Druckgradienten von wenigstens 10 hPa pro Sekunde zwischen dem Innenraum (2) und einer Umgebung (37) der Geschirrspülvorrichtung (1) freizugeben und
- die Lösebewegung der Tür (3) durch einen Endanschlag der Verriegelungseinrichtung begrenzt ist.

2. Geschirrspülvorrichtung (1) nach Anspruch 1, **dadurch gekennzeichnet, dass**
- die Öffnung der Tür (3) in der Endanschlagstellung eine maximale Spaltweite (a) von 25 cm aufweist.

3. Geschirrspülvorrichtung (1) nach einem der vorangehenden Ansprüche, **dadurch gekennzeichnet, dass**
- die Verriegelungseinrichtung (5) eine kraftabhängig lösbare Verbindung zum Sichern der Tür (3) in geschlossener Stellung umfasst.

4. Geschirrspülvorrichtung (1) nach einem der vorangehenden Ansprüche, **dadurch gekennzeichnet, dass**
- die Verriegelungseinrichtung (5) eine Verriegelungsplatte (7), und
- einen Verriegelungsstift (8) umfasst, wobei
- der Verriegelungsstift (8) eine Hinterschneidung (9) in der Verriegelungsplatte (7) hintergreift.

5. Geschirrspülvorrichtung (1) nach Anspruch 4, **dadurch gekennzeichnet, dass**
- die Verriegelungsplatte (7) an dem Gehäuse (6) und/oder an der Tür (3) über eine Sicherung (10) gesichert ist, wobei
- die Verriegelungsplatte (7) verschiebbar gegenüber der Sicherung (10) gehalten ist.

6. Geschirrspülvorrichtung (1) nach Anspruch 5, **dadurch gekennzeichnet, dass**
- die Sicherung (10) ein Haltemittel (11) mit einstellbarer Haltekraft umfasst, das einen Teilbereich der Verriegelungsplatte (7) mit dem Gehäuse (6) und/oder mit der Tür (3) reibschlüssig verbindet.

7. Geschirrspülvorrichtung (1) nach Anspruch 5 oder 6, **dadurch gekennzeichnet, dass**
- die Verriegelungsplatte (7) in einer Endanschlagstellung formschlüssig mit der Sicherung (10) verbunden ist und so eine weitere Öffnung der Tür (3) verhindert.

8. Geschirrspülvorrichtung (1) nach einem der vorangehenden Ansprüche, **dadurch gekennzeichnet, dass**
- die Verriegelungseinrichtung (5) derart angeordnet ist, dass
- durch die Verriegelungseinrichtung (5) ein Randbereich (12) der Tür (3), der einer Drehachse (13) der Tür (3) gegenüberliegt, und
- ein entsprechender Bereich des Gehäuses (6) miteinander verbindbar sind.

9. Geschirrspülvorrichtung (1) nach einem der vorangehenden Ansprüche, **dadurch gekennzeichnet, dass**
- ein Sicherungsbolzen (14) die Öffnungsbewegung der Tür (3) zumindest teilweise blockiert.

10. Geschirrspülvorrichtung (1) nach einem der vorangehenden Ansprüche, **dadurch gekennzeichnet, dass**
- die Tür (3) in der geschlossenen Stellung den Innenraum (2) gegenüber der Umgebung (37) im Wesentlichen vollständig abdichtet, wobei
- eine Ventileinrichtung (24) zur Einstellung eines Druckausgleichs zwischen dem Innenraum (2) und der Umgebung (37) vorgesehen ist.

11. Geschirrspülvorrichtung (1) nach einem der vorangehenden Ansprüche, **dadurch gekennzeichnet, dass**
- die Anschlusseinrichtung (4) einen mit einem Vakuumsystem (15) des Luftfahrzeugs strömungstechnisch verbindbaren Abwassertank (16) umfasst, wobei
- der Abwassertank (16) über eine Verbindungsleitung (17) mit einem Waschtank (18) strömungstechnisch verbindbar ist.

12. Geschirrspülvorrichtung (1) nach Anspruch 11, **dadurch gekennzeichnet, dass**
- in der Verbindungsleitung (17) eine Pumpe (19) vorgesehen ist, wobei
- die Pumpe (19) dazu eingerichtet ist, das Reinigungsmedium von dem Waschtank (18) zu einem im Vergleich zu dem Waschtank (18) höher gelegenen Teilabschnitt (20) der Verbindungsleitung (17) zu befördern.

13. Geschirrspülvorrichtung (1) nach Anspruch 12, **dadurch gekennzeichnet, dass**
- das Reinigungsmedium von dem höher gelegenen Teilabschnitt (20) strömungstechnisch frei mit dem niedriger gelegenen Abwassertank (16) verbindbar ist.

14. Geschirrspülvorrichtung (1) nach Anspruch 13, **dadurch gekennzeichnet, dass**
- der höher gelegene Teilabschnitt (20) über ein Ventil (21) mit dem Abwassertank (16) strömungstechnisch verbindbar ist.

15. Geschirrspülvorrichtung (1) nach einem der Ansprüche 11 bis 14, **dadurch gekennzeichnet, dass**
- die Befüllung des Abwassertanks (16) mit Reinigungsmedium in Abhängigkeit des Füllstandes in dem Abwassertank (16) und/oder dem Waschtank (18) regelbar ist.

## Claims

1. Dishwashing device (1) for an aircraft, comprising
- an inner chamber (2), which receives crockery to be cleaned and cleaning medium, and
- a door (3), which closes an opening in the inner chamber (2) in a closed position, and
- a connecting apparatus (4) for connecting the dishwashing device (1) to a water disposal system of the aircraft,
- the door (3) being secured in the closed position by means of at least one locking apparatus (5), **characterised in that**
- the locking apparatus (5) is designed to release the door (3) from the closed position by a releasing movement when a pressure gradient of at least 10 hPa per second between the inner chamber (2) and surroundings (37) of the dishwashing device (1) is exceeded and
- the releasing movement of the door (3) is limited by an end stop of the locking apparatus.

2. Dishwashing device (1) according to claim 1, **characterised in that**
- in the end stop position, the opening of the door (3) has a maximum gap width (a) of 25 cm.

3. Dishwashing device (1) according to any of the preceding claims, **characterised in that**
- the locking apparatus (5) has a connection which is releasable in a force-dependent manner for securing the door (3) in a closed position.

4. Dishwashing device (1) according to any of the preceding claims, **characterised in that**
- the locking apparatus (5) comprises a locking plate (7), and
- a locking pin (8),
- the locking pin (8) engaging behind an undercut (9) in the locking plate (7).

5. Dishwashing device (1) according to claim 4, **characterised in that**
- the locking plate (7) is secured on the housing (6) and/or on the door (3) by means of a securing mechanism (10),
- the locking plate (7) being displaceably retained relative to the securing mechanism (10).

6. Dishwashing device (1) according to claim 5, **characterised in that**
- the securing mechanism (10) comprises a retaining means (11) which has an adjustable retaining force and frictionally connects a portion of the locking plate (7) to the housing (6) and/or to the door (3).

7. Dishwashing device (1) according to either claim 5 or claim 6, **characterised in that**,
- in an end stop position, the locking plate (7) is positively connected to the securing mechanism (10) and thus prevents the door (3) from opening further.

8. Dishwashing device (1) according to any of the preceding claims, **characterised in that**
- the locking apparatus (5) is arranged such that
- an edge region (12) of the door (3) which is opposite a rotary shaft (13) of the door (3), and
- a corresponding region of the housing (6) can be interconnected by the locking apparatus (5).

9. Dishwashing device (1) according to any of the preceding claims, **characterised in that**
- a securing bolt (14) blocks the opening movement of the door (3) at least in part.

10. Dishwashing device (1) according to any of the preceding claims, **characterised in that**
- the door (3) substantially completely seals the inner chamber (2) from the surroundings (37) in the closed position,
- a valve apparatus (24) being provided for setting a pressure equalisation between the inner chamber (2) and the surroundings (37).

11. Dishwashing device (1) according to any of the preceding claims, **characterised in that**
- the connecting apparatus (4) comprises a waste water tank (16) which can be brought into flow connection with a vacuum system (15) of the aircraft,
- it being possible for the waste water tank (16) to be brought into flow connection with a washing tank (18) by means of a connecting line (17).

12. Dishwashing device (1) according to claim 11, **characterised in that**
- a pump (19) is provided in the connecting line (17),
- the pump (19) being designed to convey the cleaning medium from the washing tank (18) to a portion (20) of the connecting line (17) which is higher than the washing tank (18) .

13. Dishwashing device (1) according to claim 12, **characterised in that**
- the cleaning medium from the higher portion (20) can be brought into flow connection with the lower waste water tank (16) in a free-flowing manner.

14. Dishwashing device (1) according to claim 13, **characterised in that**
- the higher portion (20) can be brought into flow connection with the waste water tank (16) by means of a valve (21).

15. Dishwashing device (1) according to any of claims 11 to 14, **characterised in that**
- the filling of the waste water tank (16) with cleaning medium can be controlled depending on the fill level in the waste water tank (16) and/or the washing tank (18).

## Revendications

1. Appareil lave-vaisselle (1) pour avion, comprenant :
- un espace intérieur (2), lequel sert à recevoir de la vaisselle à laver et un agent de lavage, et
- une porte (3), laquelle ferme une ouverture de l'espace intérieur (2) dans une position fermée, et
- un dispositif de raccordement (4) pour relier l'appareil lave-vaisselle (1) à un système d'évacuation des eaux de l'avion, dans lequel
- la porte (3) est bloquée dans la position fermée par le biais d'au moins un dispositif de verrouillage (5), **caractérisé en ce que**
- le dispositif de verrouillage (5) est disposé de façon à libérer la porte (3) de la position fermée par un mouvement de desserrage lors d'un dépassement d'un gradient de pression d'au moins 10 hPa par seconde entre l'espace intérieur (2) et un environnement (37) de l'appareil lave-vaisselle (1) et
- le mouvement de desserrage de la porte (3) est limité par une butée finale du dispositif de verrouillage.

2. Appareil lave-vaisselle (1) selon la revendication 1, **caractérisé en ce que**
- l'ouverture de la porte (3) dans la position de butée finale présente une largeur de fente (a) maximale de 25 cm.

3. Appareil lave-vaisselle (1) selon l'une des revendications précédentes, **caractérisé en ce que**
- le dispositif de verrouillage (5) comprend une liaison amovible en fonction d'une force afin de bloquer la porte (3) dans la position fermée.

4. Appareil lave-vaisselle (1) selon l'une des revendications précédentes, **caractérisé en ce que**
- le dispositif de verrouillage (5) comprend une plaque de verrouillage (7), et
- une tige de verrouillage (8), dans lequel
- la tige de verrouillage (8) s'engage par l'arrière dans une échancrure (9) dans la plaque de verrouillage (7).

5. Appareil lave-vaisselle (1) selon la revendication 4, **caractérisé en ce que**
- la plaque de verrouillage (7) est bloquée sur le boîtier (6) et/ou sur la porte (3) par le biais d'une sécurité (10), dans lequel
- la plaque de verrouillage (7) est maintenue contre la sécurité (10) de manière coulissante.

6. Appareil lave-vaisselle (1) selon la revendication 5, **caractérisé en ce que**
- la sécurité (10) comprend un moyen de maintien (11) doté d'une force de maintien réglable, reliant par frottement une partie de la plaque de verrouillage (7) au boîtier (6) et/ou à la porte (3).

7. Appareil lave-vaisselle (1) selon la revendication 5 ou 6, **caractérisé en ce que**
- la plaque de verrouillage (7) est reliée à la sécurité (10) par complémentarité de formes dans une position de butée finale et empêche ainsi une ouverture ultérieure de la porte (3).

8. Appareil lave-vaisselle (1) selon l'une des revendications précédentes, **caractérisé en ce que**
- le dispositif de verrouillage (5) est agencé de telle sorte que
- par le dispositif de verrouillage (5), une zone de bord (12) de la porte (3), laquelle est opposée à un axe de pivot (13) de la porte (3), et
- une zone correspondante du boîtier (6) peuvent être reliées l'une à l'autre.

9. Appareil lave-vaisselle (1) selon l'une des revendications précédentes, **caractérisé en ce que**
- un boulon de sécurité (14) bloque le mouvement d'ouverture de la porte au moins partiellement.

10. Appareil lave-vaisselle (1) selon l'une des revendications précédentes, **caractérisé en ce que**
- la porte (3), dans la position fermée, ferme essentiellement de façon complètement étanche l'espace intérieur (2) par rapport à l'environnement (37), dans lequel
- un dispositif de valve (24) est prévu pour régler une égalité de pression entre l'espace intérieur (2) et l'environnement (37).

11. Appareil lave-vaisselle (1) selon l'une des revendications précédentes, **caractérisé en ce que**
- le dispositif de raccordement (4) comprend un réservoir d'eaux usées (16) pouvant être relié fluidiquement à un système de vide (15) de l'avion, dans lequel
- le réservoir d'eaux usées (16) peut être relié fluidiquement à une cuve de lavage (18) par le biais d'une conduite de raccordement (17).

12. Appareil lave-vaisselle (1) selon la revendication 11, **caractérisé en ce que**
- une pompe (19) est prévue dans la conduite de raccordement (17), dans lequel
- la pompe (19) est disposée de façon à acheminer l'agent de lavage de la cuve de lavage (18) à une section (20) de la conduite de raccordement (17) située à une hauteur plus grande que celle de la cuve de lavage (18).

13. Appareil lave-vaisselle (1) selon la revendication 12, **caractérisé en ce que**
- l'agent de lavage de la section (20) située plus haut peut être fluidiquement librement relié au réservoir d'eaux usées (16) situé plus bas.

14. Appareil lave-vaisselle (1) selon la revendication 13, **caractérisé en ce que**
- la section (20) située plus haut peut être reliée fluidiquement au réservoir d'eaux usées (16) par le biais d'une valve (21).

15. Appareil lave-vaisselle (1) selon l'une des revendications 11 à 14, **caractérisé en ce que**
- le remplissage du réservoir d'eaux usées (16) avec l'agent de lavage est réglable en fonction du niveau de remplissage du réservoir d'eaux usées (16) et/ou de la cuve de lavage (18).
